# EUROPÄISCHE PATENTSCHRIFT

(11) **EP 1 817 503 B1**
(45) Veröffentlichungstag und Bekanntmachung des Hinweises auf die Patenterteilung: **24.09.2014**
(21) Anmeldenummer: 05808123.3
(22) Anmeldetag: 18.11.2005
(51) Int. Cl.: F04D 27/02, F02C 7/26

(54) **VERFAHREN ZUM BETRIEB EINES TURBOVERDICHTERS**
OPERATING METHOD FOR TURBO COMPRESSOR
MÉTHODE D'OPÉRATION D'UN TURBOCOMPRESSEUR

(30) Priorität: 03.12.2004 EP 04106275
(43) Veröffentlichungstag der Anmeldung: 15.08.2007
(73) Patentinhaber: Alstom Technology Ltd, 5400 Baden (CH)
(72) Erfinder: MICHELI, Marco, CH-5430 Wettingen (CH)
(86) Internationale Anmeldenummer: PCT/EP2005/056051
(87) Internationale Veröffentlichungsnummer: WO 2006/058848

(56) Entgegenhaltungen:
- GB-A- 2 119 862
- US-A- 5 259 188
- US-A1- 2004 055 310

## Beschreibung

### Technisches Gebiet

Die Erfindung betrifft ein Verfahren zum Betrieb eines Turboverdichters gemäss Anspruch 1.

### Stand der Technik

Während des Anfahrens auf Betriebsdrehzahl müssen Turboverdichter und insbesondere axiale Turboverdichter sehr ungünstige Betriebszustände durchlaufen. Turboverdichter von Gasturbogruppen zum Beispiel werden während des Anfahrens mit sehr niedrigen Druckverhältnissen und aufgrund der niedrigen Drehzahl ungünstigsten stufenkinematischen Bedingungen betrieben. So müssen die vorderen Stufen eines Axialverdichters mit ungünstigen Anströmwinkeln fertig werden, wohingegen die hinteren Verdichterstufen an der Grenze ihrer Schluckfähigkeit betrieben werden. Es treten daher unerwünschte und ungünstige Strömungsinstabilitäten innerhalb des Verdichters auf. Aus dem Stand der Technik ist es bekannt, während der Verdichtung innerhalb eines mehrstufigen Axialverdichters Teilmassenströme abzublasen. Es ist weiterhin bekannt, so weit vorhanden, verstellbare Vorleitreihen und Leitschaufelreihen des Verdichters zu verstellen, und insbesondere eine verstellbare Vorleitreihe zu schliessen, derart, dass ein geringer Massenstrom gefördert wird. Siehe dazu z.B. US 2004/0055310. Häufig zeigt sich im Einsatz, dass die getroffenen Vorkehrungen die Strömungsinstabilitäten nicht vollständig zu verhindern vermögen. Das Problem tritt weiterhin auch dann auf, wenn ein Turboverdichter dahingehend geändert wird, einen grösseren Nennmassenstrom zu fördern. Apparative Anpassungen sind dann teuer und aufwändig.

### Darstellung der Erfindung

Ein Aspekt der vorliegenden Erfindung ist dahin gerichtet, ein Verfahren der eingangs genannten Art so anzugeben, dass die Nachteile des Standes der Technik vermieden werden. Gemäss einem spezifischeren Aspekt soll ein Verfahren zum Betrieb eines Turbokompressors derart angegeben werden, dass Strömungsinstabilitäten während des Anfahrens und Beschleunigens des Kompressors vermindert und/oder unterbunden werden.

Im weiteren bezieht sich ein Aspekt der Erfindung auf Turbokompressoren, welche wenigstens eine Vorleitreihe mit einem verstellbaren Schaufelgitter aufweisen, und spezieller bezieht sich die Erfindung auch auf mehrstufige axiale Turbokompressoren. Eine spezifischere Ausführungsform der Erfindung bezieht sich auf Verdichter von Gasturbogruppen.

Die oben beschriebenen Forderungen erfüllt das Verfahren, welches im Anspruch 1 beschrieben ist.

Die Erfindung beruht also gemäss einem Aspekt darauf, während des Beschleunigens des Verdichters die Stellung einer verstellbaren Vorleitreihe zu verändern. Das Beschleunigen des Verdichters bezieht sich hier vor allem auf die Inbetriebnahme oder das Anfahren des Verdichters, wobei dieser aus einem Ruhezustand oder ausgehend von einer Drehzahl, welche deutlich unterhalb einer Soll-Betriebsdrehzahl des Verdichters liegt, auf die Soll-Betriebsdrehzahl beschleunigt wird. Unter einer verstellbaren Vorleitreihe des Verdichters ist auf an sich bekannte Weise ein statisches Schaufelgitter zu verstehen, welches stromauf der ersten Verdichter-Laufreihe angeordnet ist, und dessen Schaufeln beispielsweise drehbar gelagert sind, derart, dass die Abströmrichtung eines das Schaufelgitter der Vorleitreihe durchströmenden Fluids geändert werden kann. Es ist bekannt, dass durch das Verstellen der Vorleitreihe bei ansonsten konstanten Betriebsbedingungen der Massenstrom des Verdichters verändert werden kann. Man spricht vom Schliessen der Vorleitreihe, wenn die Vorleitreihe in eine Richtung verstellt wird, welche zu einer Reduktion des Massenstroms führt. Umgekehrt spricht man vom Öffnen der Vorleitreihe, wenn die Schaufeln der Vorleitreihe in eine Richtung verstellt werden, welche zu einer Erhöhung des Massenstroms führt. In einer Ausführungsform der Erfindung wird die Vorleitreihe während des Beschleunigens, insbesondere beim Anfahren des Verdichters, zu einer geschlossenen Position hin verstellt. In einer Weiterbildung des Verfahrens erfolgt die Verstellung der Vorleitreihe dynamisch. Insbesondere erfolgt die Verstellung der Vorleitreihe mit einem vorgegebenen Gradienten über der Zeit. Die Stellung der Vorleitreihe wird beispielsweise als Winkel dargestellt, um den die Schaufeln des Vorleitreihengitters gegenüber einer Referenzstellung verdreht werden. In einer Ausführungsform erfolgt die Verstellung daher mit einer konstanten Winkelgeschwindigkeit der Schaufelstellung. Zur Wirkung des Verfahrens kann man sich beispielsweise vorstellen, dass die durch die Verstellung der Vorleitreihe hervorgerufene vergleichsweise langsame und betragsmässig starke Veränderung des Strömungsfeldes die hochfrequenten Strömungsinstabilitäten geringerer

Intensität dämpft und/oder unterdrückt.

Erfindungsgemäß wird bei niedrigen Drehzahlen die Vorleitreihe des Turboverdichters bis zu einer nominal voll geöffneten Stellung verstellt. Bei vollständig geöffneter Vorleitreihe wird die Drehzahl des Turboverdichters erhöht, und die Vorleitreihe wird bis zu einer ersten Drehzahl geöffnet gehalten. Die Drehzahl des Turboverdichters wird bis zu einer zweiten Drehzahl weiter erhöht, und während der Drehzahlerhöhung von der ersten Drehzahl zur zweiten Drehzahl wird die Stellung der Vorleitreihe verändert, derart, dass die Stellung der Vorleitreihe spätestens bei der zweiten Drehzahl eine nominal geschlossene Stellung erreicht. Die Drehzahl des Turboverdichters wird dann mit geschlossener Vorleitreihe weiter erhöht, beispielsweise bis zu einer nominellen Drehzahl oder einer stabilen Betriebsdrehzahl. Die nominelle Drehzahl oder die stabile Betriebsdrehzahl sind Eigenschaften des Verdichters, und können als solche vom Fachmann ohne weiteres definiert werden. Die nominelle Drehzahl ergibt sich besonders einfach dann, wenn der Verdichter ein Verdichter einer Gasturbogruppe ist. Die vollständig geöffnete Stellung der Vorleitreihe und die vollständig geschlossene Stellung der Vorleitreihe werden ebenfalls im Betriebskonzept des Verdichters fallweise definiert, was dem Fachmann ebenfalls ohne weiteres geläufig ist. Dabei ist die vollständig geöffnete Stellung der Vorleitreihe diejenige, welche die Vorleitreihe einnimmt, wenn der Verdichter mit Nennleistung betrieben wird, beziehungsweise, wenn der Turboverdichter als Verdichter einer Gasturbogruppe betrieben wird, die Stellung bei nomineller Volllastleistung der Gasturbogruppe. Die vollständig geschlossene Stellung ist die Stellung, die vom normalen Betriebsregime des Verdichters bei geringster Leistung oder beispielsweise im Leerlaufbetrieb einer Gasturbogruppe vorgegeben wird.

Die erste Drehzahl und die zweite Drehzahl werden in einer Ausführungsform der Erfindung bestimmt, indem an einem spezifischen Verdichter oder an einem Prototypen einer Verdichterbauart Versuche durchgeführt werden, bei denen das Auftreten der Strömungsinstabilitäten gemessen wird. Hierzu wird beispielsweise experimentell eine Drehzahl bestimmt, bei der bei geöffneter Vorleitreihe die Instabilitäten einen bestimmten Grenzwert zu überschreiten beginnen. Es wird dann diese Drehzahl oder eine gering darunter liegende Drehzahl als die erste Drehzahl definiert. Auf der anderen Seite kann experimentell eine Drehzahl bestimmt werden, bei der beim Start mit geschlossener Vorleitreihe die Strömungsinstabilitäten verschwinden oder wenigstens einen Schwellenwert unterschreiten. Diese Drehzahl wird dann als die zweite Drehzahl festgelegt.

Die erste Drehzahl, unterhalb derer die Vorleitreihe geöffnet gehalten wird, liegt in einer beispielhaften Ausführungsform im Bereich von 25 % bis 50 % einer nominellen Drehzahl. Insbesondere liegt sie auch im Bereich von 25 % bis 40 % der nominellen Drehzahl; weiterhin kann diese Drehzahl im Bereich von 30 % bis 40 % der nominellen Drehzahl liegen, und in besonderen Ausführungsformen liegt die erste Drehzahl auch im Bereich von 30 bis 35 % der nominellen Drehzahl oder im Bereich von 35 % bis 40 % der nominellen Drehzahl. In einer spezifischen Ausführungsform liegt die erste Drehzahl bei rund 1400 1/min, und die nominelle Drehzahl bei 3600 1/min.

Die zweite Drehzahl liegt beispielsweise im Bereich von 50 % bis 70 % der nominellen Drehzahl. Selbstverständlich kann die zweite Drehzahl, je nach den konkreten Gegebenheiten, auch im Bereich von 50% bis 60% oder von 60% bis 70% der nominellen Drehzahl liegen. In speziellen Ausführungsformen liegt die zweite Drehzahl im Bereich von 50 % bis 55 % der nominellen Drehzahl; in anderen spezifischen Ausführungsformen liegt die zweite Drehzahl im Bereich von 55 % bis 60% oder im Bereich von 60 % bis 65 % der nominellen Drehzahl. In einer sehr spezifischen Ausführungsform der Erfindung liegt die zweite Drehzahl bei 2080 1/min und die nominelle Drehzahl bei 3600 1/min. In einer Ausführungsform der Erfindung, bei der die erste Drehzahl 1400 1/min beträgt und die zweite Drehzahl bei 2080 1/min liegt, wird die Vorleitreihe beispielsweise von 1400 1/min bis rund 2000 1/min von der vollständig geöffneten auf die vollständig geschlossene Stellung verstellt.

Die Verstellung der Vorleitreihe erfolgt in einer Weiterbildung der Erfindung mit einem konstanten Winkelgradienten über der Zeit; in einer anderen Weiterbildung der Erfindung erfolgt die Verstellung mit einem konstanten Winkelgradienten über der Drehzahl.

Die Steuerung des Turboverdichters zur Ausführung des Verfahrens erfolgt beispielsweise mittels einer geeignet konfigurierten Steuereinheit. Die Steuereinheit umfasst zum Beispiel einen Prozessor, welcher durch geeignete Programmierung die Steuereinheit in die Lage versetzt, den Turboverdichter gemäss dem oben beschriebenen Verfahren zu betreiben. Die Steuereinheit wird gemäss einer Weiterbildung durch einen digitalen Code oder ein digitales Programm entsprechend konfiguriert, welcher in die Steuereinheit geladen wird oder in einem Speicher innerhalb der Steuereinheit abgelegt ist. Die Erfindung bezieht sich insofern auch auf eine Steuereinheit, welche konfiguriert ist, um einen Turboverdichter zur Ausführung eines oben beschriebenen Verfahrens zu veranlassen, sowie einen digitalen Programmcode, welcher geeignet ist, um eine Steuereinheit in geeigneter Weise zu konfigurieren, den Quellcode eines derartigen Computerprogramms, sowie einen Datenträger, auf dem der Programmcode als Quellcode oder ausführbarer Code gespeichert ist. Unter dem Datenträger ist namentlich auch ein nichtflüchtiger Speicherbaustein zu verstehen.

Die dargelegten Weiterbildungen und Ausführungsformen können selbstverständlich untereinander kombiniert werden. Andere Weiterbildungen und Ausführungsformen der Erfindung eröffnen sich dem Fachmann anhand der Unteransprüche und des nachfolgend dargestellten Ausführungsbeispiels.

### Kurze Beschreibung der Zeichnung

Die Erfindung wird nachfolgend anhand eines in der Zeichnung illustrierten Ausführungsbeispiels näher erläutert. Im Einzelnen zeigen
Figur 1 eine Gasturbogruppe mit einem gemäss der Erfindung betreibbaren Turbokompressor, und
Figur 2 einen beispielhaften Verlauf der Stellung der verstellbaren Vorleitreihe über der Verdichterdrehzahl während des Anfahrvorgangs.

Die Darstellungen in der Zeichnung sind stark vereinfacht; zum Verständnis der Erfindung nicht notwendige Elemente sind weggelassen worden. Das Ausführungsbeispiel soll dem besseren Verständnis der Erfindung dienen und soll nicht zur Einschränkung der in den Ansprüchen gekennzeichneten Erfindung herangezogen werden.

### Wege zur Ausführung der Erfindung

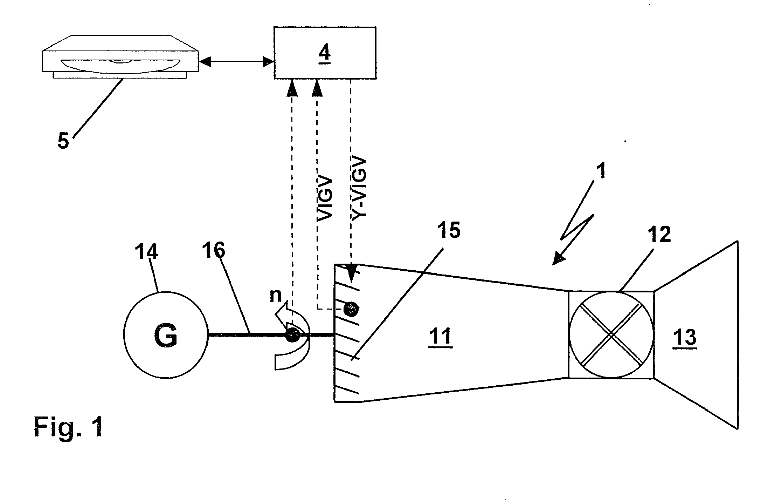

Figur 1 zeigt eine dem Fachmann an sich geläufige Gasturbogruppe 1. Die Gasturbogruppe umfasst einen Verdichter 11, eine Brennkammer 12, sowie eine Turbine 13. Im Leistungsbetrieb der Gasturbogruppe wird ein Generator 14 zur Stromerzeugung angetrieben, welcher über die Welle 16 mit dem nicht explizit dargestellten Rotor der Gasturbogruppe gekoppelt ist. Im dargestellten Ausführungsbeispiel sind die Turbine 13 und der Verdichter 11 auf einer gemeinsamen Welle angeordnet, welche mit der Antriebswelle 16 des Generators 14 fest gekoppelt ist. Die Drehzahl der Gasturbogruppe ist mit n bezeichnet und ist im Leistungsbetrieb der Gasturbogruppe im Wesentlichen konstant vorgegeben. Der Verdichter der Gasturbogruppe, welcher als mehrstufiger axialer Turbokompressor ausgeführt ist, umfasst eine verstellbare Vorleitreihe 15. Die verstellbare Vorleitreihe ist aus dem Stand der Technik an sich ebenfalls bekannt. Auf dem Fachmann geläufige und an anderen Orten ausführlich beschriebene Weise dient die verstellbare Vorleitreihe im Leistungsbetrieb der Gasturbogruppe der Variation des Massenstroms der Gasturbogruppe. Zur Regelung und Steuerung des Betriebes der Gasturbogruppe ist eine Steuereinheit 4 vorhanden. Diese erhält neben einer Vielzahl nicht dargestellter anderer Informationen über den aktuellen Betriebszustand der Gasturbogruppe Informationen über die Drehzahl n der Gasturbogruppe und die Stellung VIGV der verstellbaren Vorleitreihe. Aus diesen Informationen werden gemäss einem Betriebskonzept Stellgrössen für den Betrieb der Gasturbogruppe gebildet, wie zum Beispiel die Stellgrösse Y-VIGV für die verstellbare Vorleitreihe. Die Steuereinheit 4 wird in einer Ausführungsform der Erfindung von einem digitalen Programm zur Steuerung der Gasturbogruppe, inklusive dem Betrieb des Verdichters und der Stellung der verstellbaren Vorleitreihe, konfiguriert, welches beispielsweise auf einem externen Datenträger 5 gespeichert ist und in die Steuereinheit geladen wird. An Stelle eines externen Datenträgers kann selbstverständlich auch ein nichtflüchtiger Speicherbaustein in der Steuereinheit 4 angeordnet sein, in welchem der Code zur Konfigurierung der Steuereinheit 4 abgelegt ist.

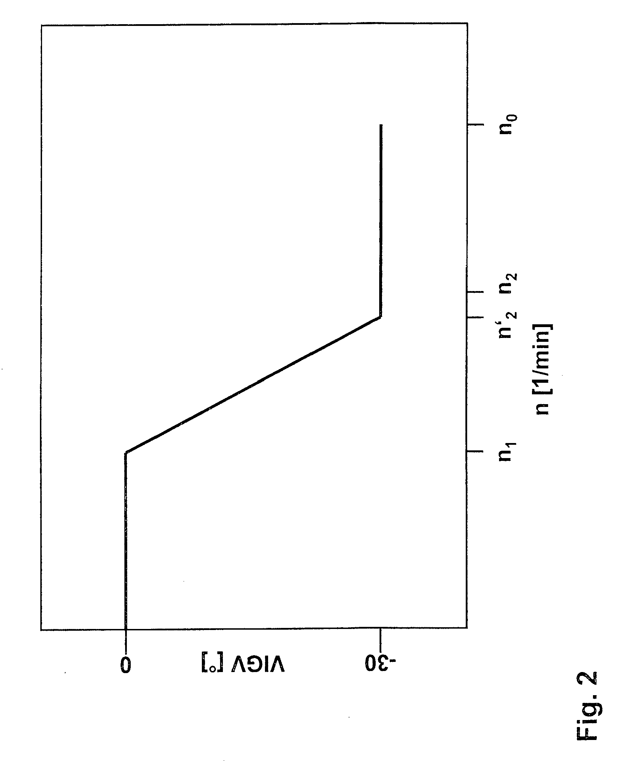

Zum Anfahren der Gasturbogruppe wird zunächst der Generator 14 elektromotorisch betrieben. Ab einer bestimmten Drehzahl wird die Brennkammer 12 gefeuert; das Beschleunigen wird weiterhin vom elektromotorisch betriebenen Generator 14 unterstützt. Beim Anfahren der Gasturbogruppe durchläuft der Kompressor 11 einen Drehzahlbereich, in dem er prinzipbedingt nicht oder nur unzureichend zu arbeiten vermag. Es ist bekannt, einen Verdichter zum Anfahren mit Abblasevorrichtungen zum Zwischenabblasen von teilverdichteter Luft aus dem Kompressor zu versehen. Auch mit Hilfe dieser Massnahmen ist es nicht immer im gesamten zu durchfahrenden Drehzahlbereich möglich, Strömungsinstabilitäten, welche von lokalen Ablöseerscheinungen bis hin zum Pumpen des Verdichters reichen, zu vermeiden. In der Figur 2 ist daher ein beispielhaftes Betriebskonzept für den Betrieb der verstellbaren Vorleitreihe beim Starten der Gasturbogruppe in einem Diagramm dargestellt. Auf der senkrechten Achse ist die Vorleitreihenstellung dargestellt, wobei ein Winkel von 0° eine vollständig geöffnete Vorleitreihe bezeichnet, während ein Winkel von -30° eine gemäss Betriebskonzept maximal geschlossene Vorleitreihe beschreibt. Auf der waagerechten Achse ist die Drehzahl n aufgetragen. n₀ bezeichnet die Nenndrehzahl der Gasturbogruppe. n₁ und n₂ sind die erste und die zweite Drehzahl, die gemäss den oben beschriebenen Kriterien festgelegt werden. Beim Beschleunigen der Gasturbogruppe wird die Vorleitreihe bis zur Drehzahl n₁ offen gehalten, und danach derart geschlossen, dass die Vorleitreihe oberhalb der zweiten Drehzahl n₂ in der maximal geschlossenen Position ist. Im Ausführungsbeispiel wird die vollständig geschlossene Position bereits bei einer kurz unterhalb der zweiten Drehzahl liegenden Drehzahl n₂' erreicht; dies liegt darin begründet, dass in diesem Beispiel die Verstellung der Vorleitreihe über der Zeit und nicht über der Drehzahl gesteuert wird.

Im Lichte dieser Ausführungen eröffnen sich dem Fachmann weitere Ausführungsformen und Weiterbildungen der in den Ansprüchen gekennzeichneten Erfindung.

### Bezugszeichenliste

- 1: Gasturbogruppe
- 4: Steuereinheit
- 5: Datenträger
- 11: Verdichter, Turbokompressor
- 12: Brennkammer
- 13: Turbine
- 14: Generator
- 15: verstellbare Vorleitreihe
- 16: Welle
- n: Drehzahl
- n₀: Nenndrehzahl, Betriebsdrehzahl
- n₁: erste Drehzahl
- n₂: zweite Drehzahl
- VIGV: Stellung der verstellbaren Vorleitreihe
- Y-VIGV: Stellgrösse zur Verstellung der verstellbaren Vorleitreihe

## Patentansprüche

1. Verfahren zum Betrieb eines Turboverdichters (11), umfassend, die Drehzahl (n) des Turboverdichters zu erhöhen, und während der Drehzahferhöhung die Stellung (VIGV) einer verstellbaren Vorleitreihe (15) zu verändern, **dadurch gekennzeichnet, dass** während der Drehzahlerhöhung bis zu einer ersten Drehzahl (n₁) wird die Vorleitreihe (15) geöffnet gehalten, dass die Drehzahl (n) des Turboverdichters (11) bis zu einer zweiten Drehzahl (n₂) weiter erhöht wird und während dieser Erhöhung von der ersten Drehzahl (n₁) zur zweiten Drehzahl (n₂) die Vorleitreihe (15) dergestalt verändert wird, dass deren Stellung spätestens bei der zweiten Drehzahl (n₂) eine nominal geschlossene Stellung errecht, und dass die Drehzahl (n) des Turboverdichters (11) mit geschlossener Vorleitreihe (15) weiter erhöht wird.

2. Verfahren gemäss Anspruch 1, **gekennzeichnet dadurch**, den Turboverdichter (11) als Verdichter einer Gasturbogruppe (1) zu betreiben.

3. Verfahren gemäss Anspruch 2, **gekennzeichnet dadurch, dass** die nominal geöffnete Stellung die Stellung der Vorleitreihe beim Betrieb der Gasturbogruppe mit Maximalleistung ist.

4. Verfahren gemäss einem der Ansprüche 2 oder 3, **gekennzeichnet dadurch, dass** die nominal geschlossene Stellung die Stellung der Vorleitreihe im Leerlaufbetrieb der Gasturbogruppe ist.

5. Verfahren gemäss einem der Ansprüche 1 bis 4, wobei die erste Drehzahl im Bereich von 25% bis 50% einer nominellen Drehzahl (n₀) liegt.

6. Verfahren gemäss einem der Ansprüche 1 bis 5, wobei die zweite Drehzahl im Bereich von 50% bis 70% einer nominellen Drehzahl (n₀) liegt.

7. Verfahren gemäss einem der Ansprüche 1 bis 6, wobei die erste Drehzahl eine Drehzahl ist, bei der eine strömungsinduzierte Schwingungsanregung ohne den Schliessvorgang der Vorleitreihe zunehmen würde.

8. Verfahren gemäss einem der Ansprüche 1 bis 7, wobei die zweite Drehzahl eine Drehzahl ist, bei der die Strömungsinstabilitäten bei einem Beschleunigen mit konstant geschlossener Vorleitreihe enden.

9. Verfahren gemäss einem der vorstehenden Ansprüche, **gekennzeichnet dadurch**, die Vorleitreihe mit einem konstanten Gradienten des Winkels des Vorleitreihengitters über der Zeit zu schliessen.

10. Steuereinheit (4), welche konfiguriert ist, um einen Verdichter zur Ausführung eines Verfahrens gemäss einem der vorstehenden Ansprüche zu veranlassen.

11. Digitaler Programmcode, welcher geeignet ist, in einer Steuereinheit (4) ausgeführt zu werden und, wenn er in der Steuereinheit ausgeführt wird, die Steuereinheit dazu zu veranlassen, einen Turboverdichter (11) gemäss einem Verfahren nach einem der Ansprüche 1 bis 10 zu betreiben.

12. Quellcode des Programmcodes gemäss Anspruch 11.

13. Datenträger (5), auf welchem ein Programmcode gemäss einem der Ansprüche 11 oder 12 gespeichert ist.

## Claims

1. Method for operation of a turbocompressor (11) comprising the rotation speed (n) of the turbocompressor being increased, and with the position (VIGV) of a row of variable inlet guide vanes (15) being varied while the rotation speed is being increased, **characterized in that** the row of inlet guide vanes (15) is kept open while the rotation speed is being increased to a first rotation speed (n₁), **in that** the rotation speed (n) of the turbocompressor (11) is increased further to a second rotation speed (n₂) and the row of inlet guide vanes (15) is varied during this increase from the first rotation speed (n₁) to the second rotation speed (n₂), **in that** their position reaches a nominally closed position at the latest at the second rotation speed (n₂), and **in that** the rotation speed (n) of the turbocompressor (11) is increased further with the row of inlet guide vanes (15) closed.

2. Method according to Claim 1, **characterized by** the tubocompressor (11) being operated as a compressor for a gas-turbine set (1).

3. Method according to Claim 2, **characterized in that** the nominally open position is the position of the row of inlet guide vanes when the gas-turbine set is being operated at maximum power.

4. Method according to one of Claims 2 or 3, **characterized in that** the nominally closed position is the position of the row of inlet guide vanes when the gas-turbine set is being operated on no load.

5. Method according to one of Claims 1 to 4, with the first rotation speed being in the range from 25% to 50% of a nominal rotation speed (n₀).

6. Method according to one of Claims 1 to 5, with the second rotation speed being in the range from 50% to 70% of a nominal rotation speed (n₀).

7. Method according to one of Claims 1 to 6, with the first rotation speed being a rotation speed at which flow-induced oscillation excitation would increase without the process of closing the row of inlet guide vanes.

8. Method according to one of Claims 1 to 7, with the second rotation speed being a rotation speed at which the flow instabilities end with acceleration with a constantly closed row of inlet guide vanes.

9. Method according to one of the preceding claims, **characterized by** the row of inlet guide vanes being closed over time with a constant gradient of the angle of the cascade formed by the row of inlet guide vanes.

10. Control unit (4) which is configured in order to cause a compressor to carry out a method according to one of the preceding claims.

11. Digital program code which is suitable for being run in a control unit (4) and, when it is being run in the control unit, causing the control unit to operate a turbocompressor (11) according to a method according to one of Claims 1 to 10.

12. Source code for the program code according to Claim 11.

13. Data storage medium (5) in which a program code according to one of Claims 11 or 12 is stored.

## Revendications

1. Procédé de fonctionnement d'un turbocompresseur (11), comportant l'augmentation de la vitesse de rotation (n) du turbocompresseur et, pendant l'augmentation de la vitesse de rotation, la modification de la position (VIGV) d'une rangée pré-directrice réglable (15), **caractérisé en ce que**, pendant l'augmentation de la vitesse de rotation jusqu'à une première vitesse de rotation (n₁), la rangée pré-directrice (15) est maintenue ouverte, **en ce que** la vitesse de rotation (n) du turbocompresseur (11) est augmentée davantage jusqu'à une deuxième vitesse de rotation (n₂) et pendant cette augmentation de la première vitesse de rotation (n₁) à la deuxième vitesse de rotation (n₂), la rangée pré-directrice (15) est modifiée de telle sorte que sa position atteigne une position nominalement fermée au plus tard à la deuxième vitesse de rotation (n₂), et **en ce que** la vitesse de rotation (n) du turbocompresseur (11) est augmentée davantage, avec la rangée pré-directrice fermée (15).

2. Procédé selon la revendication 1, **caractérisé par** le fonctionnement du turbocompresseur (11) en tant que compresseur d'un groupe turbine à gaz (1).

3. Procédé selon la revendication 2, **caractérisé en ce que** la position nominalement ouverte est la position de la rangée pré-directrice lors du fonctionnement à pleine puissance du groupe turbine à gaz.

4. Procédé selon la revendication 2 ou 3, **caractérisé en ce que** la position nominalement fermée est la position de la rangée pré-directrice en fonctionnement à vide du groupe turbine à gaz.

5. Procédé selon l'une quelconque des revendications 1 à 4, dans lequel la première vitesse de rotation se situe dans la plage de 25 % à 50 % d'une vitesse de rotation nominale (n₀).

6. Procédé selon l'une quelconque des revendications 1 à 5, dans lequel la deuxième vitesse de rotation se situe dans la plage de 50 % à 70 % d'une vitesse de rotation nominale (n₀).

7. Procédé selon l'une quelconque des revendications 1 à 6, dans lequel la première vitesse de rotation est une vitesse de rotation à laquelle une excitation vibratoire induite par l'écoulement augmenterait sans l'opération de fermeture de la rangée pré-directrice.

8. Procédé selon l'une quelconque des revendications 1 à 7, dans lequel la deuxième vitesse de rotation est une vitesse de rotation à laquelle les instabilités d'écoulement se terminent lors d'une accélération avec une rangée pré-directrice constamment fermée.

9. Procédé selon l'une quelconque des revendications précédentes, **caractérisé par** la fermeture au cours du temps de la rangée pré-directrice avec un gradient constant de l'angle de la grille formant rangée pré-directrice.

10. Unité de commande (4), laquelle est configurée pour amener un compresseur à mettre en oeuvre un procédé selon l'une quelconque des revendications précédentes.

11. Code de programme numérique, lequel est approprié pour être mis en oeuvre dans une unité de commande (4) et, lorsqu'il est mis en oeuvre dans l'unité de commande, pour amener l'unité de commande à faire fonctionner un turbocompresseur (11) conformément à un procédé selon l'une quelconque des revendications 1 à 10.

12. Code source du code de programme selon la revendication 11.

13. Support de données (5), sur lequel est enregistré un code de programme selon la revendication 11 ou 12.
